Europäisches Patentamt

European Patent Office

Office européen des brevets

(11) Veröffentlichungsnummer: **0 275 557**

**A2**

(12) # EUROPÄISCHE PATENTANMELDUNG

(21) Anmeldenummer: 87119326.4

(22) Anmeldetag: 29.12.87

(51) Int. Cl.⁴: **B23G 9/00**

(30) Priorität: 21.01.87 CS 454/87

(43) Veröffentlichungstag der Anmeldung:
27.07.88 Patentblatt 88/30

(84) Benannte Vertragsstaaten:
AT BE CH DE FR GB IT LI LU NL

(71) Anmelder: **Zavody oborové mechanizace narodni podnik**
**Sadska**
**Nymburk(CS)**

(72) Erfinder: **Dytrych, Václav**
**Brigádnická 1975**
**Nymburk(CS)**

(74) Vertreter: **Patentanwälte Beetz sen. - Beetz jun. Timpe - Siegfried - Schmitt-Fumian**
**Steinsdorfstrasse 10**
**D-8000 München 22(DE)**

(54) **Einrichtung zur Gewindeausbildung von Muttern.**

(57) Die Erfindung betrifft eine Einrichtung zur kontinuierlichen Gewindeausbildung von Muttern bei der die Standzeiten des Gewindewerkzeugs durch komplexe Adjustierung sowohl seiner Lagerung im Mitnahmekopf verlängert sind und die Werkzeuge incl. ihrer Schäfte kürzer ausgeführt werden können, was besonders für die Gewindebohrer mit kleinen Durchmessern eine wesentliche Bedeutung hat. Die Erfindung verbessert auch die Zubringung und das Aufstecken von Mutterrohlingen.

Erfindungsgemäß ist dem Gewindeschneider eine einzige Rolle (6) zugeordnet, welche im rotierenden Mitnahmekopf (4) teilweise versenkt ist und in deren Umfangsausnehmung ein Ringteil des Schaftes des Gewindebohrers (12) eingreift. Der Schneidkopf des Werkzeugs greift zwischen drei Führungsscheiben (19, 20) ein, deren Planstirnflächen die Rohlinge (13) dem Gewindeschneider (12) mit der verlangten Genauigkeit zuführen.

FIG. 4

## Einrichtung zur Gewindeausbildung von Muttern

Die Erfindung betrifft eine Einrichtung zur Gewindeausbildung von Muttern mit verlängerter Lebensdauer des Arbeitswerkzeuges und erhöhter Durchsatzleistung.

Die Ausbildung von Innengewinden in Muttern erfolgt in der Regel in Gewindeschneidmaschinen, welche eine Vorrichtung für das Zubringen und Aufstecken der Mutterrohlinge und eine Werkzeugeinheit enthält, die durch einen angetriebenen Mitnahmekopf und einem Gewindeschneider gebildet ist. Für die Einhaltung der richtigen Stellung des Mutterrohlings gegenüber dem Gewindeschneider beim Aufstecken wurde bisher oft eine prismatische Führung angewendet. Es kam dabei jedoch zu beträchtlicher Treibung zwischen dem Mutterrohling und der prismatischen Führung, was eine erhöhte Beanspruchung des Gewindeschneiders und dadurch einen übermäßigen Verschleiß und verkürzte Standzeiten zur Folge hatte.

Für die Beseitigung dieses Nachteiles wurde die prismatische Führung durch zwei Führungsscheiben ersetzt und der Arbeitsteil des Mutternaufsteckdornes wurde geformt. Der Hub des Aufsteckdornes mußte dabei der Arbeitsteillänge des Gewindeschneiders entsprechen. Die beiden Führungsscheiben konnten jedoch die dauerhafte Führung der mit Gewinden versehenen Muttern in drei Ebenen nicht gewährleisten, was einen Gewindeschneider zur Folge hatte, durch den der Gwindeeinlauf in der Mutter beschädigt und der Rohling vom Aufsteckdorn abgehoben wurde. Ferner müßte bei Änderungen der Abmessungen der Muttern nicht nur die gegenseitige Lage der Scheiben umgestellt werden, sondern es war auch der Arbeitsteil des Aufsteckdornes auszutauschen. Bei der Gewindeherstellung durch Umformen bestand ein Problem beim sicheren Aufstecken der Rohlinge durch die Ausbildung des Führungsstiftes mit einer Kegelstirnfläche.

Die Maschineneinheit einer Gewindeschneidmaschine für Muttern besitzt einen Mitnahmekopf mit dem Gewindeschneider, dessen Konstruktion durch die Schaftform des Gewindeschneiders gegeben ist. Die Lebensdauer des Gewindeschneiders wird u. a. durch seine Gestalt, durch die Ausbildung, die Länge und den Durchmesser des Schaftes und auch durch die Art seiner Lagerung im Mitnahmekopf sowie durch die Führung der fertigen Muttern beeinflußt. Bei einem bekannten Mitnahmekopf wird das Antriebsmoment vom Mitnahmekopf auf den Gewindebohrer über zwei Mitnahmescheiben übertragen, die auf Bolzen an Winkelarme frei drehbar gelagert sind. Die Winkelarme sind am Mitnahmekopf gelenkig gelagert. Auf den gegenüberliegenden Stirnflächen der Mitnahmescheiben sind Ausnehmungen in der Form eines Kreisabschnittes ausgebildet, durch welche ein Ringteil des Werkzeugschaftes durchgeht, auf den durch die Mitnahmescheiben das notwendige Drehmoment übertragen wird.

Da der Arbeitsteil des Gewindeschneiders vor die Stirnseite des Mitnahmekopfes vorgeschoben werden muß, der gerade Teil des Werkzeugschaftes durch die ganze Dicke des Mitnahmekopfes durchgeht und der Ringteil des Werkzeugschaftes, welcher auf den Gewindebohrer das Drehmoment überträgt, außerhalb der zweiten Scheibenseite des Mitnahmekopfes liegt, können für kleine Durchmesser der Gewindebohrer die notwendige Festigkeit und Führungsstabilität nicht eingehalten werden. Die Einwirkung von beträchtlichen Axial-, Radial-und Reibungskräften verursacht Vibrationen des Gewindeschneiders, was eine fehlerhafte Funktion, eine schlechte Güte der Gewinde und einen übermäßigen Verschleiß der Schneiden bzw. Formflächen verursacht.

Bei der Vorrichtung zum Zubringen und Aufstecken der Mutternrohlinge oder von den Gestaltungen der Werkzeugeinheit wurde festgestellt, daß die Abnützung und die Lebensdauer des Gewindebohrers auf seiner körperlichen Gestaltung, Lagerung, Führung oder auf dem Zubringungsverfahren der Mutternrohlinge und auf ihrer unabhängigen und abgeteilten Aufsteckung auf den Gewindebohrer nicht abhängig ist, sondern daß sich diese Einflüsse in einem gemeinsamen Zusammenhang als ein Komplex geltend machen.

Die Aufgabe der Erfindung liegt also in der Ausbildung einer Einrichtung zur fortlaufenden Gewindeausbildung von Muttern, welche gleichzeitig eine regelmäßige und getrennte Aufsteckung der Mutternhalbzeuge auf das Gewindewerkzeug und ihre sichere Führung in den mit der Werkzeugachse parallelen Ebenen, den Durchgang von fertigen Muttern am Werkzeug bei minimaler Reibung und bei verringerter Beanspruchung des Werkzeugs ermöglicht und eine einfache und schnelle Umrüstung bei genügender Arbeitssicherheit für die Bedienung sicherstellt.

Die oben angeführten Nachteile der bisher bekannten Lösungen beseitigt und die angegebene Aufgabe löst die erfindungsgemäße Einrichtung zur kontinuerlichen Gewindeausbildung von Muttern, welche für die Gewindeausbildung sowohl die Technologie der spanabhebenden Bearbeitung als auch die Technologie der spanlosen Verformung ausnützen kann und die eine Vorrichtung für die Zubringung und für die Aufsteckung von den Mutternhalbzeugen auf den Gewindebohrer enthält, welche für die Führung der Halberzeugnisse die auf dem Maschinenrahmen befestigten und frei drehbar gelagerten Scheiben verwendet, und aus einer Werkzeugeinheit, welche einen Gewindebohrer mit einem Walzenschaft aufweist, der auf dem Ende in einen Ringteil übergeht, der bei dem Betrieb durch ein gleichachsig austauschbares Führungsfutteral der Muttern durchgeht, das in der Scheibenachse des angetriebenen Mitnahmekopfes gelagert ist, und der durch die Einwirkung der Kraftübertragung auf den Schaftringteil mitgenommen ist, deren Wesen darin liegt, daß der Ringteil des Schaftes des Gewindebohrers mit einem Spiel durch den entsprechenden Ausnehmungsteil in der Umfangsfläche der Rolle durchgeht, die auf dem Bolzen drehbar gelagert ist, dessen Achse mit der Achse des Walzenteils des Gewindebohrers windschief ist und der in der mit der Scheibe des Mitnahmekopfes fest verbundenen Konsole befestigt ist, wobei die Ringteilmitte des Schaftes des Gewindebohrers auf der Rotationsachse der Rolle liegt, zu ihrem Umfang durch seine konkave Stirnfläche, deren Krümmungsradius dem Radius der Rolle annähernd gleich ist, die Haltescheibe dicht anliegt, welche auf dem auf der Konsole angebrachten Anschlußelement frei drehbar gelagert ist.

Gemäß der Erfindung ist vorteilhaft, wenn ringsherum des Arbeitsteils des Gewindebohrers drei frei drehbar gelagerte Führungsscheiben mit den zu der Achse des Gewindebohrers senkrechten Rotationsachsen und mit den mit der Achse des Gewindebohrers gleichlaufenden Planstirnflächen angeordnet sind. Die Scheiben sind auf den auf dem Träger angebrachten Armen befestigt, der auf dem Maschinenrahmen gelagert ist. Auf dem Träger ist ebenfalls das Auffallplättchen mit zwei Auffallflächen aufgefangen, welche den Flächen der zugebrachten Halberzeugnisse der Muttern entsprechen und in den Ebenen der Stirnflächen von den zwei Führungsscheiben liegen, welche unterhalb des Gewindebohrers untergebracht sind. Auf dem Träger ist gleichachsig mit dem Gewindebohrer der Aufsteckdorn der Halberzeugnisse verschiebbar gelagert, der zu dem Antriebsaggregat angeschlossen ist, welcher mit der Indikations-und Steuervorrichtung verschaltet ist, die mit dem Magazin der Halberzeugnisse der Muttern verbunden sind.

Die erfindungsgemäße Konstruktion der Einrichtung zur kontinuierlichen Gewindeausbildung der Muttern ermöglicht dank der Anwendung von drehbaren Führungsscheiben bei der Vorrichtung für die Zubringung und für die Aufsteckung eine dauerhafte optimale Führung der Mutternhalberzeugnisse nicht nur bei der Aufsteckung auf den Gewindebohrer, sondern auch im Verlauf der ganzen Gewindeausbildung, so daß keine Schiefstellung des Gewindebohrers und keine Ausbildung von einem Unqualitätsgewinde in den Muttern entsteht. Der notwendige Hub des Aufsteckdornes kann verkürzt werden und seine Stirnarbeitsfläche muß nicht ausgeformt sein, kann eben sein und deshalb muß nicht bei der Dimensionsänderung der Muttern mit Gewinden geändert werden.

Die erfindungsgemäße Gestaltung des Mitnahmekopfes ermöglicht eine Verkürzung des geraden Teiles des Gewindebohrerschaftes, was besonders bei kleinen Gewinden eine höhere Lebensdauer des Gewindebohrers bringt, so daß Unterbrechungen des Maschinenganges vermindert werden.

Im folgenden wird ein Ausführungsbeispiel der erfindungsgemäßen Einrichtung zur kontinuierlichen Gewindeausbildung in Muttern anhand der Zeichnung ausführlich beschrieben. Es zeigen:

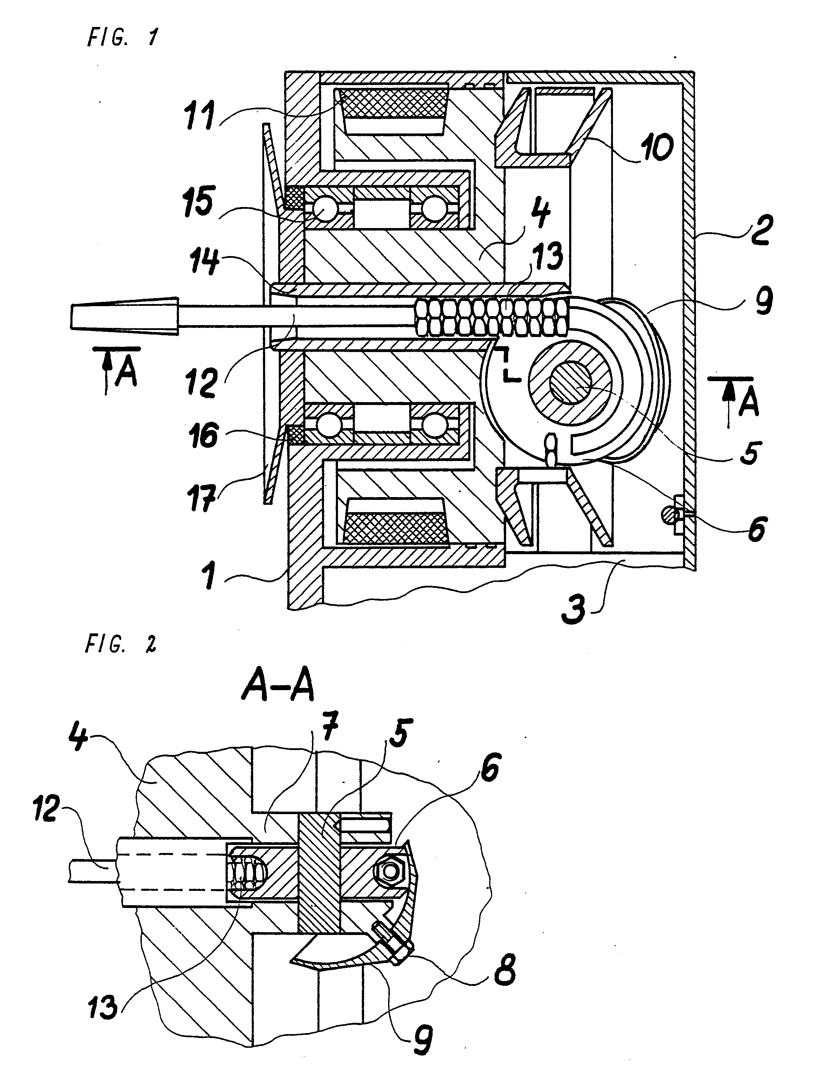

Fig. 1 einen Querschnitt durch den Aufnahmekopf mit dem Gewindebohrer,

Fig. 2 einen Schnitt A - A durch den Mitnahmekopf in Fig. 1,

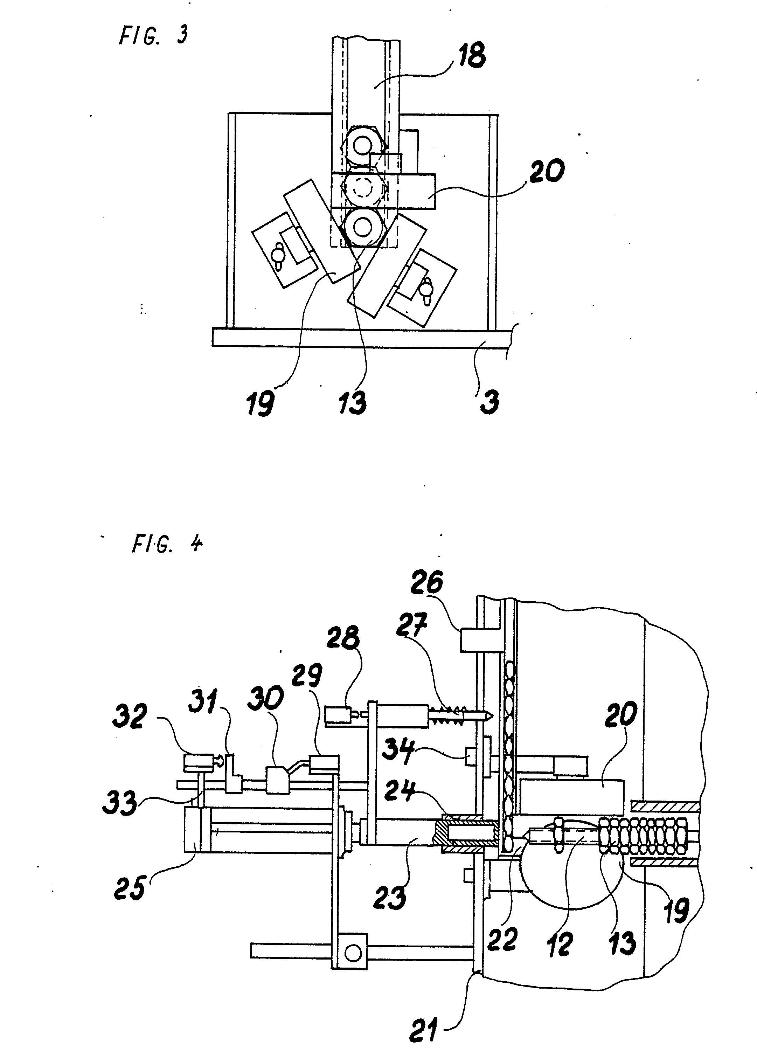

Fig. 3 eine schematische Ansicht von der rechten Seite auf die Anordnung der Führungsscheiben und des Magazins für die Rohlinge und

Fig. 4 schematisch die Vorrichtung zum Aufstecken der Rohlinge in einer Vertikalebene.

Die dargestellte Einrichtung zur kontinuierlichen Gewindeausbildung der Muttern enthält einen Mitnahmekopf 4 für einen Gewindeschneider 12. Der Mitnahmekopf 4 ist in Lagern 15 eines Gehäuses 1 gelagert, das auf einem Maschinenrahmen 3 befestigt und auf der Austrittsseite der Muttern 13 durch eine Schutzhaube 2 mit einem Dämpfungsgürtel abgedeckt ist.

Der Mitnahmekopf 4 ist eine Scheibe mit einem koaxialen Lagerausschnitt, die an ihrem Umfang eine Ringnut für einen Antriebskeilriemen 11 trägt. Zentral in der Scheibe des Mitnahmekopfes 4 ist eine austauschbare Führungsbuchse 14 für die Muttern 13 angeordnet, durch welche der Gewindeschneider 12 verläuft. Der Gewindeschneider 12 ist in der Führungsbuchse 14 mittels der fertigen Muttern 13 geführt, deren Oberfläche die Innenfläche der Führungsbuchse 14 berührt und deren Innenfläche am Schaft des Gewindeschneiders 12 anliegt. Der Schaft des Gewindeschneiders 12 ist auf der Austrittsseite, d. h. außerhalb der Scheibe des Aufnahmekopfes 4 zu einem Ringteil umgebogen, der in einer Umfangsausnehmung einer Roller 6 endet. Die Rolle 6 ist auf einem Zapfen 5 frei drehbar gelagert, welcher auf einer Konsole 7 sitzt und dessen Achse zur Rotationsachse des Aufnahmekopfes 4 windschief ist. Die Konsole 7 ist gegenüber der Scheibe des Aufnahmekopfes 4 festgelegt bzw. vorteilhaft einstückig ausgebildet. Auf der Konsole 7 ist über ein Verbindungselement 8 eine haubenförmige Haltescheibe 9 frei drehbar gelagert, welche mit ihrer konkaven Stirnfläche an der Umfangsfläche der Rolle 6 anliegt, wobei ihre Rotationsachse die Achse des Bolzens 5 der Rolle 6 schneidet. Auf der Mutternaustrittsseite ist an der Scheibe des Aufnahmekopfes 4 eine hohle Mutterausfallscheibe 10 koaxial befestigt, an deren Außenrand zwei schräge Ringflansche zur Ausbildung eines Ringkanals vorgesehen sind, der von einem Dämpfungsgürtel teilweise abgedeckt wird.

Die Lager 15 sind vor Verunreinigung durch eine Dichtung 16 geschützt, die zwischen einem Schleuderring 17 auf der Eintrittsseite des Mitnahmekopfes 4 und dem Gehäuse 1 sitzt.

Der Schneidenkopf des Gewindeschneiders 12 ragt über die Vorderseite des Aufnahmekopfes 4 zwischen untere und obere Führungsscheiben 19, 20, welche auf Armen drehbar und einstellbar gelagert sind. Die Arme sind auf einem mit dem Maschinenrahmen 3 verbundenen Träger 21 befestigt. Die Führungsscheiben 19, 20 sind gegeneinander so angeordnet, daß ihre ebenen Stirnflächen den Außenflächen der Rohlinge der Muttern 13 entsprechen, die auf den Gewindeschneider 12 gleichachsig aufgesteckt werden und mit seiner Achse parallel sind. In Richtung der Achse des Gewindeschneiders 12 ist zwischen den unteren Führungsscheiben 19 und dem Träger 21 eine Auffangplatte 22 angebracht, deren zwei Funktionsflächen den zwei Außenflächen der fallenden Rohlinge entsprechen und in den Ebenen der Arbeitsstirnflächen der unteren Führungsscheiben 19 liegen. Dieses Auffangplättchen 22 ist am Träger 21 austauschbar und einstellbar befestigt. Oberhalb des Auffangplättchens 22 ist am Träger 21 ein Magazin 18 für die Mutternrohlinge, z. B. eine Gravitationsrutsche befestigt. Mit dem Träger 21 ist eine Führung 24 für einen Aufsteckdorn 23 der Rohlinge fest verbunden. Der Aufsteckdorn 23 ist an einem Antriebsaggregat 25 gehaltert, das einen Rückwärtshub ausübt. Am Aufsteckdorn 23 ist ein mechanischer Fühler 27 montiert, der z. B. durch einen mechanischen Stift gebildet ist, welcher im Verlauf der Arbeit in den Innenraum des Magazines 18 eingreift und mit einem Ausschalter 28 für die Betätigung des Antriebsaggregates 25 gekoppelt ist. Der Hub des Aufsteckdornes 23 wird einerseits von einem vorderen verstellbaren Anschlag 30, der mit einem ersten Endschalter 29 zusammenwirkt, und andererseits von einem mit einem hinteren verstellbaren Anschlag 31 zusammenarbeitenden zweiten Endschalter 32 bestimmt, der auf einer Stütze 33 angeordnet ist. Auf dem Träger 21 ist auch ein Kontrollfühler 26 für den Zustand der Rohlinge im Magazin 18 untergebracht, der mit dem Ausschalter 28 verschaltet ist. Die Arme, welche die Führungsscheiben 19, 20 tragen, sind bei diesem Ausführungsbeispiel am Träger 21 mittels Schrauben 34 befestigt.

Die Funktion der Einrichtung ist folgende: Die Mutternrohlinge fallen durch Schwerkraft aus dem Magazin 18 auf das Auffangplättchen 22. Von diesem werden sie durch den Aufsteckdorn 23, der durch das Antriebsaggregat 25 axial bewegt wird, auf die Arbeitsflächen der Führungsscheiben 19, 20 und auf den drehenden Gewindeschneider 12 aufgesteckt. Die unteren Führungsscheiben 19 und die obere Führungsscheibe 20 führen die Mutter 13 während der ganzen Periode des Schneidens bzw. der Formung des Gewindes gleichachsig mit dem Gewindeschneider 12 und sichern sie gegen Verdrehung. Wenn die Mutter 13 durch den Schneidenkopf des Gewindeschneiders 12 durchgeht, drückt der vordere Anschlag 30 den ersten Endschalter 29 zusammen und der Aufsteckdorn 23 kehrt in seine Ausgangsposition zurück, wo der hintere verstellbare Anschlag 31 den zweiten Endschalter 32 betätigt und ein neuer Arbeitshub des Antriebsaggregates 25 beginnt. Vom Aufsteckdorn 23 wird der mechanische Fühler 27 mitgenommen, der in eine Öffnung im Magazin 18 und bei dem weiteren Vorschub in die Bohrung eines Rohlings eingreift. Wenn das Loch im Rohling nicht durchgeschnitten ist oder sich die Rohlinge in dem Magazin 18 verklemmen und der mechanische Fühler 27 auf einen Widerstand stößt, wird über den Ausschalter 28 das Antriebsaggregat 25 ausgeschaltet.

Wenn das Magazin 18 nicht ausreichend mit Rohlingen gefüllt ist, löst der Kontrollfühler 26 ein Signal für die Maschinenabschaltung aus.

Falls der Zustand der Rohlinge im Magazin 18 in Ordnung ist, setzt sich der Arbeitszyklus automatisch fort. Die Mutter 13 geht über den Schneidenkopf des Gewindebohrers 12 und wird auf seinem Schaft mittels der weiteren Muttern 13 in die Führungshülse 14 im Mitnahmekopf 4 gedrückt, der sich in den Lagern 15 dreht. Der Mitnahmekopf 4 ist in diesem Falle durch einen Keilriemen 11 angetrieben, der in die Nut auf dem Umfang des scheibenförmigen Mitnahmekopfes 4 eingreift. Zusammen mit ihm dreht sich auch die Führungsbuchse 14 und der Gewindeschneider 12, auf den die Rotation vom Mitnahmekopf 4 über die Konsole 7, den Bolzen 5, die Rolle 6 und die fertigen Muttern 13 auf dem Ringteil seines Schaftes übertragen wird. Der Schaft des Gewindeschneiders 12 ist in der Führungsbuchse 14 mittels der fertigen Muttern 13 geführt. Diese werden im Verlauf der Maschinenarbeit fortwährend zu dem ringförmig gebogenen Endeteil des Schaftes vorgeschoben und gelangen aus der Führungsbuchse 14 in die Umfangsausnehmung der Rolle 6, wo sie zusammen mit dem Gewindeschneider 12 durch die Haltescheibe 9 gehalten werden. Am Ende des Ringteils des Schaftes verlassen die fertigen Muttern 13 durch Einwirkung der Fliehkraft den Gewindeschneider 12 in die Umfangsausnehmung der Rolle 6 und fallen durch die Öffnung in der Mutterausfallscheibe 10 durch einen bestimmten Aufnahmeraum in der Schutzhaube 2 aus der Maschine heraus.

Wenn Muttern 13 mit anderen Abmessungen verarbeitet werden sollen, müssen bestimmte Teile, wie die Rolle 6, die Führungsbuchse 14 usw. ausgetauscht und eine neue Einstellung der Führungsscheiben 19, 20 und der Betätigungselemente des Antriebsaggregates 25 des Aufsteckdornes 23 vorgenommen werden.

Die Erfindung ist nicht nur auf die oben beschriebene konkrete Ausführung begrenzt, sondern umfaßt auch alle technisch äquivalenten Lösungen, welche bei Muttergewinde-Formmaschinen angewendet werden können, die sowohl bei den hohen, als auch bei den niedrigen Schnittgeschwindigkeiten spanend oder spanlos arbeiten. Die Erfindung läßt sich auch im Manipulationsbereich bzw. zur Herstellung anderer Gegenstände einsetzen, bei welcher eine Rotationsbewegung des Werkzeuges und eine Durchlaufbewegung der Rohlinge erfolgt.

## Ansprüche

1. Einrichtung zur spanenden oder spanlosen Gewindeausbildung von Muttern, bestehend
aus einer Vorrichtung für das Zubringen und Aufstecken von Mutterrohlingen auf ein Gewindewerkzeug, welche drehbar gelagerte Führungsscheiben enthält, und
aus einer Werkzeugeinheit, deren Gewindewerkzeug in einem Mitnahmekopf festgelegt ist und einen Schaft aufweist, der die Muttern an ein austauschbares Führungsfutteral übergibt,
**dadurch gekennzeichnet,**
daß der zu einem Ringteil geformte Endteil des Werkzeugschaftes (12) mit Spiel in einer entsprechenden Ausnehmung am Umfang einer Rolle (6) aufgenommen ist, deren Drehachse zur Längsachse des Gewindewerkzeugs (12) windschief ist und die an dem scheibenförmigen Mitnahmekopf (4) drehbar gelagert ist.

2. Einrichtung nach Anspruch 1,
**dadurch gekennzeichnet,**
daß die Mitte des zu einem Ringteil umgebogenen Werkzeugschafts (12) in der Drehachse der Rolle (6) liegt und daß die einen Führungskanal für die Muttern (13) bildende Umfangsausnehmung der Rolle (6) teilweise von einer napfförmigen Scheibe (9) abgedeckt ist, deren konkave Stirnfläche einen dem Radius der Rolle (6) entsprechenden Krümmungsradius hat und die auf einer auch die Rolle (6) tragenden Konsole (7) drehbar gelagert ist.

3. Einrichtung nach Anspruch 1 oder 2,
**dadurch gekennzeichnet,**
daß rings um den Arbeitsteil des Gewindewerkzeugs (12) drei Führungsscheiben (19, 20) mit zur Werkzeugachse senkrechten Drehachsen und zur Werkzeugachse gleichlaufenden Planstirnflächen frei drehbar angeordnet sind, daß an einem Träger (21) des Maschinenrahmens (3) die Arme der Führungsscheiben (19, 20) und ein Auffangplättchen (22) mit zwei Fangflächen angeordnet sind, welche den Flächen der Mutter-Rohlinge entsprechen und in den Ebenen der Stirnflächen von zwei unter dem Gewindewerkzeug (12) angeordneten Führungsscheiben (19) liegen, wobei am Träger (21) gleichachsig zum Gewindewerkzeug (12) ein Aufsteckdorn (23) für die Rohlinge längsverschiebbar angeordnet ist, der mittels des Antriebsaggregates (25) betätigt ist, welcher mit der Indikations-und Steuervorrichtung verschaltet ist, die mit dem Magazin (18) der Rohlinge der Muttern (13) verbunden ist.

4. Einrichtung nach einem der Ansprüche 1 bis 3,
**dadurch gekennzeichnet,**
daß die Indikations-und Steuervorrichtung des Antriebsaggregates (25) einen mit einem Ausschalter (28) für das Antriebsaggregat (25) verschalteten mechanischen Fühler (27) enthält, der durch den Aufsteckdorn (23) getragen ist, dessen Hub durch einen vorderen verstellbaren Anschlag (30) und durch einen hinteren verstellbaren Anschlag (31) für die Betätigung von Endschaltern (29 bzw. 32) der Reversierung des Antriebsaggregates begrenzt ist.

5. Einrichtung nach einem der Ansprüche 1 bis 4,
**dadurch gekennzeichnet,**
daß das Magazin (18) mit einem Kontrollfühler (26) für den Ladungszustand versehen ist, der mit dem Ausschalter des Antriebsaggregates (25) verschaltet ist.

6. Einrichtung nach einem der Ansprüche 1 bis 5,
**dadurch gekennzeichnet,**
daß an der Rückseite des drehangetriebenen Mitnahmekopfes (4) eine hohle Scheibe (10) von U-förmigem Querschnitt befestigt ist, deren geneigte flanschartige Ränder einen Austragskanal für die Muttern (13) begrenzen, der über eine Durchtrittsöffnung in seinem Boden mit der Umfangs-Ausnehmung der Rolle (7) in Verbindung steht und nach außen zumindest teilweise durch einen Dämpfungsriemen abgedeckt ist.

FIG. 1

FIG. 2

A-A

FIG. 3

18

20

19  13  3

FIG. 4

26

27

28

29

32  31  30

33

34

24

25

23

21  22  12  13  19

20